# FASCICULE DE BREVET EUROPEEN

(11) **EP 0 539 344 B1**
(45) Date de publication et mention de la délivrance du brevet: **24.06.1998**
(21) Numéro de dépôt: 92870170.5
(22) Date de dépôt: 20.10.1992
(51) Int. Cl.: E04C 2/36

(54) **Elément de construction présentant une structure cellulaire et procédé de fabrication de cet élément de construction**
Bauelement mit zellartiger Struktur und Verfahren zur Herstellung desselben
Construction element having a cellular structure and method of manufacturing such element

(30) Priorité: 25.10.1991 BE 9100992
(43) Date de publication de la demande: 28.04.1993
(73) Titulaire: CENTRE DE RECHERCHES METALLURGIQUES CENTRUM VOOR RESEARCH IN DE METALLURGIE Assoc. sans but lucratif Ver, zonder winstoogmerk, B-1040 Bruxelles (BE)
(72) Inventeur: Schmitz, Bruno, B-4550 Nandrin (BE); Delooz, Michel, B-4000 Liège (BE); Defourny, Jacques, B-4120 Neupre (BE); Leroy, Vincent, B-4000 Liège (BE)
(74) Mandataire: Lacasse, Lucien Emile

(56) Documents cités:
- CH-A- 343 803
- CH-A- 385 148
- LU-A- 87 707
- US-A- 2 744 042
- US-A- 3 084 770

## Description

La présente invention conceme un procédé de fabrication d'un élément de construction présentant une structure cellulaire, en particulier une structure en nid d'abeilles, suivant le préambule de la revendication 1.

Des éléments de construction présentant une structure en nid d'abeilles sont bien connus actuellement et ils trouvent de multiples utilisations dans différents domaines de la technique. Leurs propriétés spécifiques, à savoir une faible masse volumique associée à une rigidité élevée, les rendent particulièrement intéressants pour la fabrication de parois ou de planchers destinés à des véhicules aéronautiques, ferroviaires ou automobiles.

On connaît actuellement des structures en nid d'abeilles réalisées en matières organiques à base de résine ou de cellulose. Ces structures offrent l'avantage d'être très légères et insensibles à la corrosion, tout en présentant une résistance mécanique intéressante. Leur mise en oeuvre est cependant coûteuse, et elles doivent être soigneusement sélectionnées en fonction de leur résistance et des performances spécifiées pour la construction envisagée.

II est bien connu dans la technique, notamment par l'ouvrage "Grundlagen der Luftfahrzeugtechnik in Theorie und Praxis. Bd Il: Flugwerk; TÜV Rheinland 1982; pages 15-16, paragraphe 3: Sandwichbauweise", de fabriquer des structures cellulaires en métal léger, par collage de bandes minces et expansion de la structure par traction.

On connaît également, par le brevet CH-A-385 148, un procédé de fabrication de nids d'abeille par soudage de fines tôles d'acier et expansion par traction, de façon conventionnelle. Le paquet de tôles est soudé en une seule fois sur toute son épaisseur, avec interposition de plaquettes de protection, l'opération étant répétée à chaque endroit d'assemblage.

Il existe d'autre part des feuilles de très faible épaisseur, en diverses matières et notamment en métal, appelées feuils. Au sens de la présente demande, un feuil métallique est ainsi une feuille de métal dont l'épaisseur est comprise entre 5 µm et 100 µm.

Par ailleurs, on connaît à présent, notamment par les documents BE-A-905.588 et BE-A-1000571, une technique permettant de produire un feuil métallique de manière économique. Il s'agit d'une technique dite d'électroformage, qui consiste essentiellement à former un film métallique très mince sur une cathode rotative par voie électrolytique, puis à séparer ce film de la cathode et à le soumettre à un traitement thermique approprié. On obtient ainsi un feuil métallique électrolytique, appelé aussi électrofeuil.

A partir de cet état de la technique, la présente invention a pour objet de proposer un procédé de fabrication d'un élément de construction présentant une structure cellulaire, notamment une structure en nid d'abeilles, qui est particulièrement économique et qui présente également un excellent comportement dans des conditions d'utilisation très diverses.

Conformément à la présente invention, un procédé de fabrication d'un élément de construction présentant une structure cellulaire, dans lequel on empile une pluralité de feuils métalliques, on solidarise lesdits feuils l'un à l'autre par soudage selon des tracés rectilignes parallèles prédéterminés et on écarte les pièce extrêmes de l'empilement de feuils métalliques pour écarter lesdits feuils l'un de l'autre entre lesdites zones de soudage, est caractérisé en ce que l'on dépose successivement lesdits feuils un par un sur le feuil précédent respectif, en ce que l'on soude individuellement chaque feuil au feuil précédent en provoquant, dans la zone de soudage, la fusion totale du demier feuil déposé, ainsi que la fusion superficielle du feuil précédent, et en ce que l'on répète ladite opération de soudage pour chaque nouveau feuil métallique déposé.

Suivant une mise en oeuvre particulière, on utilise des feuils métalliques obtenus par voie électrolytique. Ces feuils sont de préférence réalisés en métal ferreux, afin de présenter une résistance mécanique élevée, éventuellement à haute température.

L'épaisseur des feuils de métal est comprise de préférence entre 15 µm et 60 µm. Cette épaisseur doit être suffisante, à savoir au moins 15 µm, pour conférer à la structure cellulaire une résistance et une rigidité satisfaisantes; par contre, une épaisseur supérieure à 60 µm n'apporte plus d'amélioration sensible à cet égard, alors qu'elle entraîne une augmentation inutile du poids de la structure.

Les feuils métalliques sont avantageusement soudés l'un à l'autre par une opération de soudage à haute densité d'énergie, par exemple par un faisceau laser, un faisceau d'électrons ou un microplasma.

Les cellules formées par les feuils de métal précités peuvent avoir la forme hexagonale habituelle rencontrée dans les nids d'abeilles conventionnels. Suivant une variante particulière de l'invention, les cellules peuvent aussi avoir une forme quadrangulaire, c'est-à-dire comporter quatre côtés et constituer un parallélogramme, un losange, un rectangle ou un carré.

Selon une autre caractéristique de l'invention, les feuils métalliques peuvent être munis de perforations. La forme de ces perforations est généralement quelconque; elle est avantageusement régulière, et de préférence simple, notamment pour faciliter leur réalisation et éviter d'introduire des amorces de déchirure dans les feuils. Ces perforations sont de préférence disposées à des intervalles réguliers et selon des alignements prédéterminés. Ces perforations peuvent être réalisées soit pendant la fabrication du feuil, soit ultérieurement dans le feuil terminé.

L'utilisation de feuils perforés permet de réduire le poids de l'élément de construction. Elle conduit aussi, de manière inattendue, à une amélioration du comportement de cet élément en cas de déformation, comme cela sera expliqué plus loin.

Suivant une caractéristique supplémentaire de l'invention, les feuils métalliques peuvent comporter une couche de protection contre la corrosion. Cette couche de protection peut être soit déposée ultérieurement sur le feuil, soit intégrée à celui-ci au cours de sa fabrication.

Un élément de construction conforme à l'invention peut présenter une forme spatiale quelconque, par exemple en vue d'être placé dans un espace confiné ou présentant des contours accidentés. La forme requise de l'élément de construction peut être obtenue par découpage suivant une géométrie tridimensionnelle éventuellement complexe.

Cet élément de construction peut être rempli, totalement ou partiellement, de résine synthétique injectée dans les cellules. La présence de cette résine assure une protection contre la corrosion des feuils métalliques tout en renforçant la rigidité de la structure cellulaire.

Suivant encore une autre caractéristique de l'invention, l'élément de construction peut comporter une enveloppe avantageusement mince et résistante, par exemple en résine synthétique. Cette enveloppe est de préférence étanche, ce qui permet d'utiliser cet élément de construction comme réservoir, par exemple dans un véhicule automobile.

Les cordons de soudure réalisés selon les tracés précités sont rectilignes et parallèles l'un à l'autre. Ils sont de préférence équidistants dans un même feuil et, dans deux feuils successifs, ils sont décalés latéralement de la moitié de la distance séparant deux cordons.

Chaque tracé de soudage peut comporter deux cordons parallèles séparés par une distance sensiblement égale à la largeur d'un ruban de colle; dans ce cas, les divers groupes de deux cordons sont équidistants, respectivement décalés, comme on l'a indiqué plus haut. Le déploiement de la structure ouvre alors des cellules de forme hexagonale conventionnelle, où chaque cellule comporte deux côtés ayant une double épaisseur.

Chaque tracé de soudage peut cependant ne comporter qu'un seul cordon, dont l'ensemble répond aux conditions précitées. Dans ce cas, le déploiement de la structure ouvre des cellules à quatre cotés, ayant la forme d'un parallélogramme, d'un losange, d'un rectangle ou d'un carré selon les distances séparant les cordons de soudure et selon le degré de déploiement de la structure. La structure obtenue est ici dite en "diamant" lorsque les cellules ont une section en losange ou en carré.

L'invention sera maintenant décrite de manière plus détaillée, au moyen d'exemples de réalisation illustrés par les dessins annexés, dans lesquels la
- Fig. 1: montre une structure cellulaire en nid d'abeilles; la
- Fig. 2: illustre le procédé de fabrication d'une structure en nid d'abeilles de la Fig. 1; la
- Fig. 3: montre une structure cellulaire dite en "diamant"; la
- Fig. 4: illustre le procédé de fabrication d'une structure en diamant de la Fig. 3; et la
- Fig. 5: traduit le comportement en compression d'un élément de construction à structure cellulaire.

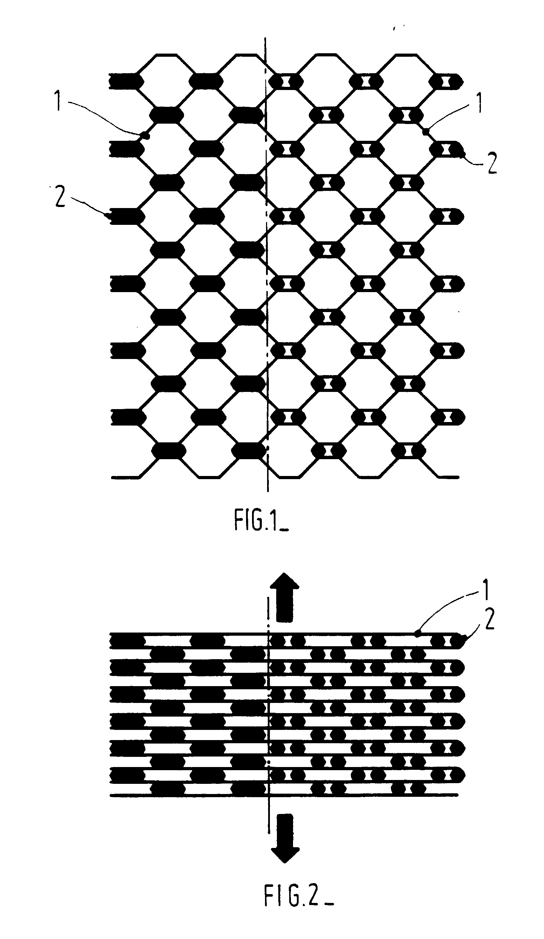

Les figures 1 à 4 sont des représentations schématiques, dans lesquelles on n'a reproduit que les éléments nécessaires à une bonne compréhension de l'invention. Des éléments identiques ou analogues sont désignés par les mêmes repères numériques dans toutes ces figures.

La Fig. 1 montre, en coupe transversale, une structure cellulaire en nid d'abeilles, constituée d'un empilement de feuils 1 en métal ferreux, obtenus par voie électrolytique. Ces feuils sont profilés de façon à former des cellules hexagonales; ils sont assemblés l'un à l'autre par des moyens de liaison 2.

Dans une structure conforme à l'invention, les moyens de liaison 2 sont des cordons de soudure, disposés par paires parallèlement l'un à l'autre, chaque paire de cordons de soudure occupant une bande de largeur sensiblement égale à celle d'un ruban de colle. La structure a alors l'allure représentée dans la partie droite de la Fig. 1.

A titre de comparaison, la partie gauche de la Fig. 1 montre une structure assemblée par des rubans de colle conventionnels, tels que déjà connus de l'état de la technique.

Comme on le voit clairement dans cette Fig. 1, deux côtés de chaque cellule de la structure comportent une double épaisseur de matière.

Cette structure a été obtenue par le procédé qui est illustré schématiquement dans la Fig. 2, dont les parties gauche et droite se rapportent respectivement aux parties gauche et droite de la Fig. 1.

Les feuils 1, généralement plans, sont empilés l'un sur l'autre avec interposition de moyens de liaison 2, puis on écarte les faces extrêmes de l'empilement, par une traction dans le sens des flèches. L'empilement se déploie et la structure initialement plane devient une structure cellulaire tridimensionnelle.

Pour obtenir une structure soudée au contraire, les feuils à assembler sont d'abord superposés puis solidarisés par le soudage réalisé par la fusion simultanée des deux feuils posés en dernier lieu.

Dans les représentations en coupe des Fig. 1 et 2, les rubans de colle, respectivement les paires de cordons de soudure, sont disposés en quinconce et conduisent à des cellules hexagonales.

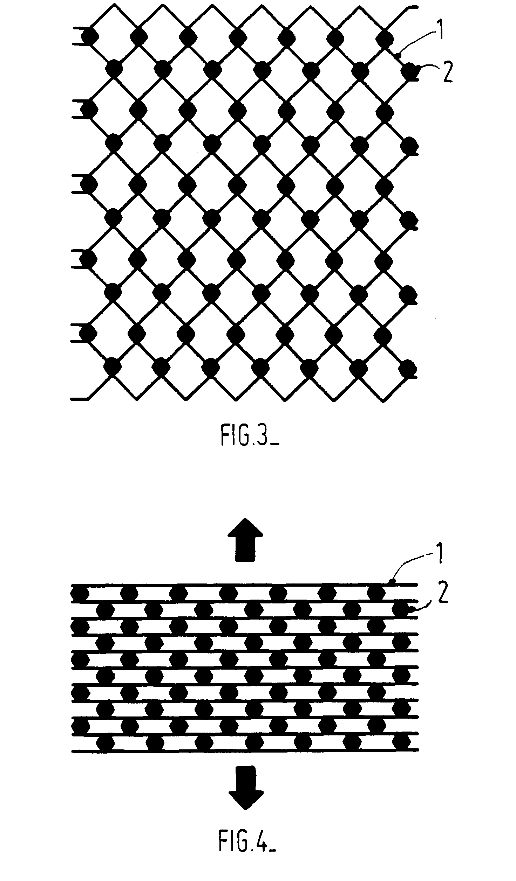

Les Fig. 3 et 4 sont analogues aux Fig. 1 et 2. Elles concernent une structure cellulaire dont les feuils 1 sont solidarisés par des cordons de soudure 2 simples. Ces cordons sont également disposés en quinconce, mais ici ils conduisent à des cellules comportant quatre côtés. Dans cette structure, tous les cotés des cellules ont une épaisseur simple, ce qui représente un gain appréciable de matière, et donc de poids, par exemple de l'ordre de 25 %, par rapport à une structure à cellules hexagonales.

A titre d'exemple de mise en oeuvre du procédé de l'invention, on a fabriqué une structure cellulaire à mailles hexagonales à partir de feuils en métal ferreux, par soudage au moyen d'un faisceau laser (Fig. 1, droite). Les feuils de fer, obtenus par dépôt électrolytique sur une cathode rotative, avaient une épaisseur de 50 µm. On a utilisé pour le soudage un faisceau laser d'une longueur d'onde de 10,6 µm, produit par un laser CO₂; la puissance du faisceau était de 600 W et il était pulsé avec une fréquence de 1000 Hz. Cette valeur de la fréquence de pulsation a été choisie de façon à respecter une condition déterminée expérimentalement, selon laquelle le rapport entre la vitesse de soudage, égale ici à 1 m/s, et la fréquence de pulsation est de préférence supérieur à 50 µm. Le faisceau était focalisé au moyen d'une lentille à un diamètre inférieur à 10 fois l'épaisseur du feuil, c'est-à-dire dans ce cas inférieur à 500 µm. A faible distance en aval de la soudure, et dans l'axe de celle-ci, on a insufflé un gaz protecteur constitué d'azote avec un débit de 2 l/min.

Le soudage a été effectué sans préparation préalable de la surface des feuils de fer. Le faisceau laser, orienté perpendiculairement à la surface des feuils, provoquait la fusion totale du dernier feuil et la fusion superficielle de l'avant-dernier feuil sans affecter l'antépénultième feuil. De cette manière, seuls les deux feuils supérieurs de l'empilement sont solidarisés par une opération de soudage, laquelle est ensuite répétée pour chaque nouveau feuil déposé.

La même technique de soudage a été utilisée pour former la structure des Fig. 3 et 4, mais avec un seul cordon sur chaque tracé de solidarisation. La structure présente alors des mailles en forme de losange.

L'utilisation de feuils perforés permet de réaliser des structures cellulaires encore plus légères et dont les différentes cellules communiquent entr'elles. Ce nouveau type de structure cellulaire offre plusieurs possibilités intéressantes. Il permet notamment de fabriquer des réservoirs présentant de nombreux avantages; il se comporte par ailleurs de façon nettement plus favorable qu'une structure conventionnelle sous un impact entraînant une déformation.

Une structure cellulaire peut être découpée selon une géométrie tridimensionnelle pouvant épouser une forme quelconque, éventuellement complexe. Ce découpage peut être effectué au moyen d'un faisceau énergétique intense, tel qu'un faisceau laser ou un jet de plasma.

La structure peut alors être garnie d'une enveloppe extérieure imperméable, par exemple en résine ou en ciment, de façon à former un réservoir capable d'être placé harmonieusement et efficacement dans les véhicules. Ce type de réservoir permet de minimiser les mouvements du liquide et les effets de vague, et de réduire les risques d'explosion dans le cas d'un liquide inflammable.

Par ailleurs, l'emploi de feuils perforés confère à cette structure un comportement particulièrement favorable en cas de choc.

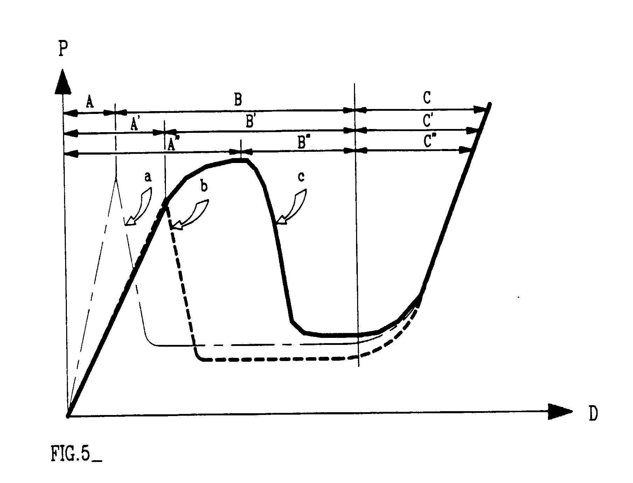

Une structure cellulaire conventionnelle sollicitée en compression présente une courbe charge (P)-déformation (D) du type représenté dans la Fig. 5 (courbe a). Elle se caractérise par un domaine très rigide (A), suivi d'une zone d'effondrement (B) puis d'une portion très courte de consolidation (C).

Le domaine (A) correspond à une déformation élastique de la structure; cette déformation est faible en raison de la rigidité de la structure cellulaire. Le domaine (B) commence par une chute brusque de la charge de compression P, due au flambement de la structure, qui se manifeste lorsque l'on atteint la limite d'élasticité, ou de rigidité, de la structure. Il comporte ensuite un palier sensiblement horizontal, correspondant à un effondrement de la structure sans augmentation sensible de la charge P. Le domaine de consolidation (C) exprime l'augmentation de la charge appliquée à la structure effondrée, avec de faibles déformations lors de l'écrasement final de la structure. Le domaine (C) n'est pas significatif pour apprécier la résistance de la structure cellulaire.

La diminution brutale de la charge P, au début du domaine (B), n'est pas favorable en cas d'impact, car elle ne correspond pas à une capacité importante d'absorption d'énergie ni à une déformabilité contrôlée de la structure. L'utilisation de feuils perforés (courbe b) réduit la rigidité de la structure cellulaire et permet d'allonger le domaine de la déformation élastique (A') au détriment du domaine de la déformation plastique (B').

D'autre part, l'injection de résine synthétique dans la structure cellulaire, perforée ou non, (courbe c), permet de conférer à celle-ci une charge plus importante avant l'apparition du domaine d'instabilité (B"), d'étendre encore le domaine de la déformation élastique (A") et de conserver un niveau de charge P plus élevé dans le domaine de la déformation plastique (B"), ce qui est très nettement favorable à l'augmentation de la capacité d'absorption d'énergie de ladite structure cellulaire.

Enfin, une résistance élevée à la corrosion des feuils métalliques assure une longue durée de vie de la structure cellulaire. A cet effet, les feuils métalliques sont avantageusement pourvus d'une couche de protection, obtenue pendant la fabrication des feuils ou déposée ultérieurement à leur surface. En particulier, une couche de phosphate, de résine ou d'un métal peu sensible à la corrosion (Zn, Sn, Al, Cr, Ni, par exemple) assure une bonne protection des feuils tout en n'altérant pas leur soudabilité. La fabrication de la structure cellulaire reste dès lors très aisée.

## Revendications

1. Procédé de fabrication d'un élément de construction présentant une structure cellulaire, dans lequel on empile une pluralité de feuils métalliques (1), on solidarise lesdits feuils l'un à l'autre par soudage selon des tracés rectilignes parallèles prédéterminés et on écarte les pièces extrêmes de l'empilement de feuils métalliques (1) pour écarter lesdits feuils l'un de l'autre entre lesdites zones de soudage, caractérisé en ce que l'on dépose successivement lesdits feuils un par un sur le feuil précédent respectif, en ce que l'on soude individuellement chaque feuil au feuil précédent en provoquant, dans la zone de soudage, la fusion totale du dernier feuil déposé, ainsi que la fusion superficielle du feuil précédent, et en ce que l'on répète ladite opération de soudage pour chaque nouveau feuil métallique déposé.

2. Procédé suivant la revendication 1, caractérisé en ce que l'on soude lesdits feuils métalliques (1) l'un à l'autre par une opération de soudage à haute densité d'énergie.

3. Procédé suivant la revendication 1 ou 2, caractérisé en ce que l'on soude lesdits feuils selon des tracés équidistants dans un même feuil et latéralement décalés de la moitié de la distance séparant deux tracés, dans deux feuils successifs.

4. Procédé suivant l'une ou l'autre des revendications 1 à 3, caractérisé en ce que l'on soude lesdits feuils métalliques (1) l'un à l'autre par une opération de soudage au moyen d'un faisceau laser.

5. Procédé suivant l'une ou l'autre des revendications 1 à 4, caractérisé en ce que l'on utilise des feuils métalliques ayant une épaisseur comprise entre 15 µm et 60 µm.

6. Procédé suivant l'une ou l'autre des revendications 1 à 5, caractérisé en ce que lesdits feuils métalliques (1) présentent des perforations.

7. Procédé suivant l'une ou l'autre des revendications 1 à 6, caractérisé en ce que lesdits feuils métalliques (1) comportent une couche de protection contre la corrosion.

8. Procédé suivant l'une ou l'autre des revendications 1 à 7, caractérisé en ce que l'on remplit, au moins en partie, ledit élément de construction avec une résine.

## Patentansprüche

1. Herstellungsverfahren für Konstruktionselemente mit Zellenstruktur, bei dem man eine Mehrzahl Metallfolien (1) aufschichtet, diese Folien durch Schweißen entlang vorbestimmten, parallelen geraden Linien aneinander befestigt und die Endstücke der Schichtung von Metallfolien (1) entfernt, um diese Folien zwischen jenen Schweißzonen voneinander zu trennen, dadurch gekennzeichnet, daß man besagte Folien einzeln nacheinander jeweils auf die vorangehende Folie auflegt, jede Folie individuell an die vorige Folie anschweißt, was in der Schweißzone völliges Schmelzen der zuletzt aufgelegten Folie sowie oberflächliches Schmelzen der vorigen Folie bewirkt, und diesen Schweißvorgang für jede neu aufgelegte Metallfolie wiederholt.

2. Verfahren nach Anspruch 1, dadurch gekennzeichnet, daß man besagte Metallfolien (1) durch einen Schweißvorgang mit hoher Energiedichte aneinanderschweißt.

3. Verfahren nach Anspruch 1 oder 2, dadurch gekennzeichnet, daß man besagte Folien entlang Linien in gleichem Abstand in ein und derselben Folie und seitlich um die Hälfte des Abstands zwischen zwei Linien versetzt in zwei aufeinanderfolgenden Folien schweißt.

4. Verfahren nach einem der Ansprüche 1 bis 3, dadurch gekennzeichnet, daß man besagte Metallfolien (1) durch einen Schweißvorgang mittels eines Laserstrahls aneinanderschweißt.

5. Verfahren nach einem der Ansprüche 1 bis 4, dadurch gekennzeichnet, daß man Metallfolien mit einer Dicke zwischen 15 µm und 60 µm einsetzt.

6. Verfahren nach einem der Ansprüche 1 bis 5, dadurch gekennzeichnet, daß besagte Metallfolien (1) Perforierungen aufweisen.

7. Verfahren nach einem der Ansprüche 1 bis 6, dadurch gekennzeichnet, daß besagte Metallfolien (1) eine Korrosionsschutzschicht tragen.

8. Verfahren nach einem der Ansprüche 1 bis 7, dadurch gekennzeichnet, daß man besagtes Konstruktionselement zumindest teilweise mit einem Harz füllt.

## Claims

1. Process for manufacturing a structural element having a cellular structure, in which a plurality of metal foils (1) are stacked, the said foils are fastened to one another by welding along predetermined parallel straight lines and the outermost pieces of the stack of metal foils (1) are moved apart, in order to separate the said foils from one another between the said welding zones, characterized in that the said foils are deposited one by one on the respective previous foil, in that each foil is welded individually to the previous foil, causing, in the welding zone, complete melting of the last foil deposited, and surface melting of the previous foil, and in that the said welding operation is repeated for each new metal foil deposited.

2. Process according to Claim 1, characterized in that the said metal foils (1) are welded to one another by a welding operation having a high energy density.

3. Process according to Claim 1 or 2, characterized in that the said foils are welded along lines which are equidistant in any one foil and are laterally offset, by half the distance separating two lines, in two successive foils.

4. Process according to any one of Claims 1 to 3, characterized in that the said metal foils (1) are welded to one another by an operation of welding by means of a laser beam.

5. Process according to any one of Claims 1 to 4, characterized in that metal foils having a thickness of between 15 µm and 60 µm are used.

6. Process according to any one of Claims 1 to 5, characterized in that the said metal foils (1) have perforations.

7. Process according to any one of Claims 1 to 6, characterized in that the said metal foils (1) have a corrosion-protection layer.

8. Process according to any one of Claims 1 to 7, characterized in that the said structural element is filled, at least partly, with a resin.
